# EUROPÄISCHE PATENTSCHRIFT

(11) **EP 1 029 404 B1**
(45) Veröffentlichungstag und Bekanntmachung des Hinweises auf die Patenterteilung: **28.08.2002**
(21) Anmeldenummer: 98961025.8
(22) Anmeldetag: 20.10.1998
(51) Int. Cl.: H04L 1/18

(54) **VERFAHREN UND EINRICHTUNG ZUR DATENÜBERTRAGUNG IN EINEM DIGITALEN ÜBERTRAGUNGSSYSTEM MIT ARQ**
DATA TRANSMISSION PROCESS AND DEVICE IN A DIGITAL TRANSMISSION SYSTEM WITH ARQ
PROCEDE ET DISPOSITIF DE TRANSMISSION DE DONNEES DANS UN SYSTEME DE COMMUNICATION NUMERIQUE AVEC ARQ

(30) Priorität: 06.11.1997 DE 19749148
(43) Veröffentlichungstag der Anmeldung: 23.08.2000
(73) Patentinhaber: SIEMENS AKTIENGESELLSCHAFT, 80333 München (DE)
(72) Erfinder: FRANZ, Volker, D-82178 Puchheim (DE); EMMER, Dieter, D-82110 Germering (DE)
(86) Internationale Anmeldenummer: DE9803069
(87) Internationale Veröffentlichungsnummer: WO99025089

(56) Entgegenhaltungen:
- FR-A- 2 730 370
- NARAYANAN K R ET AL: "A NOVEL ARQ TECHNIQUE USING THE TURBO CODING PRINCPIPLE" IEEE COMMUNICATIONS LETTERS, Bd. 1, Nr. 2, März 1997, Seiten 49-51, XP000687091
- KOORAPATY H ET AL: "MAP DECODING FOR SATELLITE CHANNELS" 1996 IEEE 46TH. VEHICULAR TECHNOLOGY CONFERENCE, MOBILE TECHNOLOGY FOR THE HUMAN RACE ATLANTA, APR. 28 - MAY 1, 1996, Bd. 1, Nr. CONF. 46, 28. April 1996, Seiten 477-481, XP000594322 INSTITUTE OF ELECTRICAL AND ELECTRONICS ENGINEERS

## Beschreibung

Die Erfindung betrifft ein Verfahren zur paketorientierten Datenübertragung in einem digitalen Übertragungssystem, bei dem ein ARQ-Protokoll und eine Kanalcodierung zur Fehlerminimierung mit Codierern und Decodierern, die eine Soft-Information zur Auswertung erneut übertragener Datenrahmen abgeben, angewendet wird, und eine Anordnung gemäß dem Oberbegriff des Anspruchs 8.

Ein Verfahren und eine Anordnung der eingangs genannten Art sind in IEEE COMMUNICATIONS LETTERS, Bd.1, Nr.2, S.49-51, K.R. Narayanan et al., "A Novel ARQ Technique using the Turbo Coding Principle" beschrieben. Gemäß dem dort beschriebenen Verfahren werden während eines früheren Decodierungsversuchs von Daten eines Datenrahmens logarithmische Wahrscheinlichkeitsverhältnisse (LLR - log-likelihood ratio) für die zu decodierenden Daten ermittelt. Schlägt ein Decodierungsversuch fehl, so erfolgt eine erneute Übertragung des entsprechenden Datenrahmens. Bei der Decodierung der Daten des erneut gesendeten Datenrahmens werden die während des früheren Decodierungsversuchs bestimmten logarithmischen Wahrscheinlichkeitsverhältnisse in vorwärtsschreitender Verfahrensweise als a-priori-Informationen genutzt.

Bei einer herkömmlichen Übertragungsstrecke zur Übertragung und zum Empfang von digitalen Daten werden die Daten von einer Datenquelle in Blöcke zusammengefaßt und einem Faltungscodierer zugeführt. Die codierten Datenblöcke werden in einem Interleaver verwürfelt und dann über einen ISI-Kanal (ISI = Intersymbol Interferenz) übertragen. Empfängerseitig werden die Datenblöcke in einem Entzerrer entzerrt. Nachdem der Entzerrer die Interferenzen beseitigt hat, werden die entzerrten Datenblöcke in einem Deinterleaver verarbeitet, und dieser gibt die Datenblöcke nach dem Deinterleaving an einen Decodierer ab, der dann den Großteil der Fehler korrigiert und seine Ausgangssignale an die Datensenke weitergibt.

In einem derartigen System wird mit Hilfe der Kanalcodierung versucht, den Einfluß der Fehler, die bei der Übertragung in dem ISI-Kanal auftreten, zu korrigieren. Durch die Codierung wird die Bitrate erhöht, und alle eingehenden Informationen werden der Kanalcodierung unterworfen. Je nach dem verwendeten Kanal werden verschiedene Codierungsverfahren genutzt, beispielsweise werden für die Datenübertragung andere Codierungsvarianten benutzt als für die Sprachcodierung. Für die Fehlerkorrektur kommen die Fehlervorwärtskorrektur (FEC: Forward Error Correction) der physikalischen Schicht und die Fehlerkorrektur mit dem ARQ-Protokoll für Layer 2 in Frage, die entsprechend zur transparenten oder nichttransparenten Übertragungsklasse führen.

Bei der Fehlerkorrektur mit ARQ-Protokoll (ARQ = Automatic Request for Retransmission) erfolgt eine gezielte Fehlerbehebung für die Datenübertragung. Das ARQ-Verfahren auf der Grundlage der Flußsteuerung führt zu einer nichttransparenten Übertragung und ist in Kombination mit FEC besonders wirksam. Bei dem GSM-System wird ARQ im RLP (RLP = Radiolink Protokoll) verwendet.

Bei ARQ-Protokollen werden Datenrahmen, die beispielsweise während der Übertragung verworfen werden, wieder neu angefordert und wiederholt übertragen. Bei erneutem Empfang der Daten kann Information, die bei dem vorhergehenden Empfang dieser Daten generiert worden ist, wieder verwendet werden. Das Prinzip, das hierfür vorgeschlagen wird, ist bekannt aus IEEE Transactions on Communications, Band COM-33, Nr. 5, Mai 1985, D.Chase, "Code Combining-A Maximum Likelihood Decoding Approach for Combining an Arbitrary Number of Noisy Packets". Dabei wird die Information in Paketen übertragen, die mit einem Code mit relativ hoher Coderate codiert sind und die wiederholt werden, um eine zuverlässige Kommunikation zu erreichen, wenn die Redundanz in dem Code nicht ausreicht, um die Kanalinterferenzprobleme zu überwinden. Der Empfänger kombiniert mit Rauschsignalen behaftete Pakete, um ein Paket mit einer Coderate zu erhalten, die gering genug ist, so daß eine zuverlässige Kombination selbst bei Kanälen möglich wird, die extrem hohe Fehlerraten haben. Es wird versucht, durch die Kombination einer minimalen Anzahl von Paketen die Coderate und die Verzögerung auf ein Minimum herabzusetzen, die erforderlich ist, um ein vorgegebenes Paket (Datenrahmen) zu decodieren. Es handelt sich hier um das klassische Verfahren des Code Combinings, welches es zu verbessern gilt. werden Diversity-Methoden, beispielsweise das Metric Combining angewendet.

Demgegenüber liegt der Erfindung die Aufgabe zugrunde, ein Verfahren und eine Einrichtung zur Datenübertragung in einem digitalen Übertragungssystem bei paketvermitteltem Dienst anzugeben, wobei der Aufwand bei der Verarbeitung von erneuten Übertragungen von Datenrahmen im Rahmen eines ARQ-Protokolls herabgesetzt und die Fehlerkorrektur verbessert.

Diese Aufgabe wird erfindungsgemäß durch ein Verfahren mit den in Anspruch 1 genannten Merkmalen und durch eine Anordnung mit den in Anspruch 8 genannten Merkmalen gelöst.

Der Datenrahmen, der erneut nach dem ARQ-Protokoll übertragen wird, ist, wenn er kanalcodiert worden ist, schon einmal decodiert worden. Bei der Decodierung werden a-posteriori und extrinsische Wahrscheinlichkeiten für die codierten Bits gewonnen. Die extrinsischen oder a-posteriori Wahrscheinlichkeiten können als a-priori Information bzw. Wahrscheinlichkeiten bei dem Empfang genutzt werden. Somit können über den Kanaldecodierer und das ARQ-Protokoll a-priori Informationen gewonnen werden, und der Empfänger verarbeitet die zusätzliche Information zusammen mit dem erneut gesendeten Datenrahmen in vorwärtsschreitender Verfahrensweise. Mit anderen Worten können durch die ARQ-Protokolle Informationen, die der Decodierer erzeugt hat, bei der Entzerrung der erneut gesendeten Datenrahmen als a-priori Information verwendet werden und zwar auch dann, wenn ein Metric Combining nach dem Stand der Technik wegen charakteristischer Eigenschaften der Strukturen nicht möglich ist.

Des weiteren wird die beim Decodieren des Datenrahmens n+1 gewonnene Soft-Information gemäß dem erfindungsgemäßen Verfahren mit einem oder mehreren der Datenrahmen 1 bis n in rückwärtsschreitender Verfahrensweise verarbeitet. Mit den extrinsischen oder a-posteriori-Informationen, die mit dem Datenrahmen n+1 gewonnen worden sind, werden daher die vorher übertragenen Datenrahmen kombiniert, um zu erreichen, daß der Datenrahmen soweit von Fehler befreit werden kann, daß er nicht mehr erneut gesendet werden muß. Für die Durchführung des erfindungsgemäßen Verfahrens kann daher die extrinsische Information, die bei der Übertragung eines Datenrahmens gewonnen worden ist, sowohl zur Aufbereitung von später gesendeten Datenrahmen eingesetzt als auch zur Aufbereitung von bereits vorher übertragenen Datenrahmen genutzt werden.

Nach einer vorteilhaften Ausgestaltung des erfindungsgemäßen Verfahrens wird das Verfahren abwechselnd in vorwärtsschreitender und in rückwärtsschreitender Verfahrensweise durchgeführt.

Nach einer weiteren vorteilhaften Ausgestaltung des erfindungsgemäßen Verfahrens wird das Verfahren wiederholt, bis keine erneute Übertragung im Rahmen des ARQ-Protokolls angefordert wird.

Um die Zahl der Wiederholungen bei der Übertragung eines Datenrahmens zu begrenzen, wird bei einer vorteilhaften Ausgestaltung des erfindungsgemäßen Verfahrens nach einer vorgegebenen Anzahl von wiederholten Sendungen des Datenrahmens abgebrochen.

Optional wird die Soft-Information in dem Entzerrer dadurch verarbeitet, daß die "soft"-Information direkt in dem Algoritmus verwendet wird. Dieses Verfahren hat sich in der Praxis bei dem Kombinieren von übertragenen Datenrahmen bewährt und ist somit auch bei der vorliegenden Erfindung vorteilhaft.

Aus der DE 42 24 214 C2 ist ein Verfahren zur quellengesteuerten Kanaldecodierung durch Erweiterung des Viterbi Algorithmus bekannt, wobei zur Bevorzugung gewisser Informationsbits eine Anzahl von Zustände, zum Beispiel Zustände von Datenbits durch einen Metrikzuschlag angehoben oder abgesenkt werden, über welchen a-priori oder a-posteriori-Information vorliegt. Hierbei wird die a-priori oder a-posteriori-Information unmittelbar in dem Algorithmus verwendet. Zur Lösung der Probleme bei der Übertragung mit ARQ-Protokoll kann diese bekannte Patentschrift keinen wesentlichen Beitrag leisten.

Nach einer weiteren vorteilhaften Ausgestaltung des erfindungsgemäßen Verfahrens wird die a-priori Information in dem Entzerrer durch einen "Symbol-nach-Symbol"-MAP-Algorithmus verarbeitet, wodurch sich eine größere Flexibilität in der Anwendung des erfindungsgemäßen Verfahrens ergibt.

Aus IEEE Transactions of Information Serie, März 1974, "Optimal Decoding of Linear Codes for Minimal Simple Error Rate", L.R. Bahl, J. Cocke F. Jelinek und J. Raviv ist ein Symbol-nach-Symbol MAP Algorithmus bekannt. Dabei wird das allgemeine Problem behandelt, die a-posteriori Wahrscheinlichkeiten der Zustände und Übergänge einer Markov-Quelle abzuschätzen, die durch einen diskreten Kanal beobachtet wird. Die Decodierung von linearen Block- und Convolutional Codes, um die Symbolfehlerwahrscheinlichkeit zu minimieren, wird als Spezialfall dieses Problems diskutiert. Es geht hier nur um eine optimale Decodierung, nicht jedoch um eine Korrekturverfahren nach einem ARQ-Protokoll, um die ARQ-Methode mit möglichst geringem Aufwand durchführen zu können.

Nach einer weiteren vorteilhaften Ausgestaltung des erfindungsgemäßen Verfahrens wird von der Information am Ausgang des Decodierers nur die extrinsische oder a-posteriori Information zur Weiterverarbeitung verwendet, wobei ein befriedigendes Ergebnis mit einem geringeren Aufwand bei dem Kombinieren der Signale erreicht wird.

Schließlich ist das erfindungsgemäße Verfahren besonders vorteilhaft, wenn es bei dem GSM-System mit RLP-Protokoll angewendet wird. Grundsätzlich ist die Erfindung nicht auf die Anwendung bei dem GSM-System beschränkt, ist jedoch in diesem Zusammenhang besonders vorteilhaft.

Eine vorteilhafte Ausgestaltung der erfindungsgemäßen Anordnung ist dadurch gekennzeichnet, daß die Steuereinrichtung mit einem Decodierer n (n = 1 ... N und N = Anzahl der im Rahmen des ARQ-Protokolls gesendeten Datenrahmen) und entweder mit einem Entzerrer n+1 oder mit einem der Entzerrer 1 bis n-1 gekoppelt ist

Ein Beispiel für eine Übertragungsstrecke nach dem Stand der Technik und Ausführungsbeispiele der Erfindung werden nun anhand der beiliegenden Zeichnungen beschrieben. Es zeigen:
- Figur 1: ein Blockdiagramm einer Übertragungsstrecke nach dem Stand der Technik;
- Figur 2: ein Blockdiagramm für die Verarbeitung eines zweimal gesendeten Datenblocks im Rahmen eines ARQ-Protokolls nach dem Stand der Technik;
- Figur 3: ein Blockdiagramm für die Verarbeitung eines zweimal gesendeten Datenblocks im Rahmen eines ARQ-Protokolls nach einem Ausführungsbeispiel der Erfindung;
- Figur 4: ein Blockdiagramm, welches die wiederholte Übertragung eines Datenrahmens zum Zwecke der Fehlerkorrektur einer Ausführungsform der Erfindung darstellt; und
- Figur 5: ein Blockdiagramm, welches die mehrfache Übertragung eines Datenrahmens zum Zwecke der Fehlerkorrektur nach einem weiteren Ausführungsbeispiel der Erfindung darstellt.

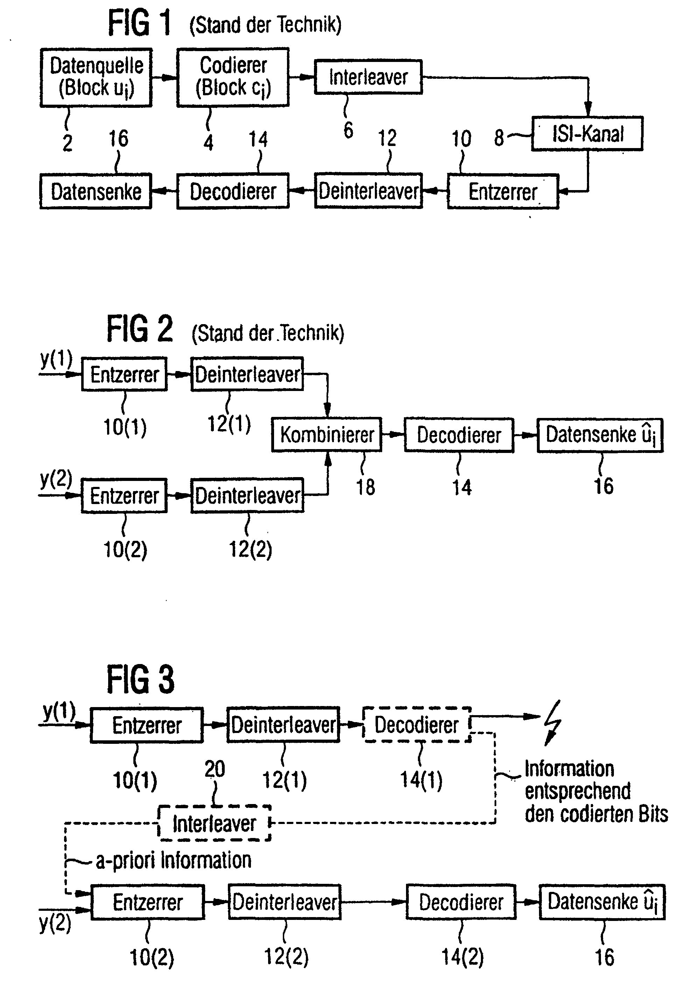

Figur 1 zeigt eine herkömmliche Übertragungsstrecke zur Übertragung und zum Empfang von digitalen Daten. Die Daten werden von einer Datenquelle 2 in Form von Bits geliefert. Diese Bits werden in Blöcken zu uᵢ zusammengefaßt und einen Codierer zugeführt, der codierte Blöcke cᵢ liefert. Die codierten Datenblöcke cᵢ werden in einem Interleaver 6 verwürfelt. Die Datenblöcke werden dann nach dem Interleaving über einen ISI-Kanal 8 übertragen und in einem Entzerrer 10 entzerrt. Nachdem der Entzerrer 10 die Interferenzen beseitigt hat, gibt er entzerrte Datenblöcke an einen Deinterleaver 12 ab, und dieser gibt die Datenblöcke nach dem Deinterleaving an einen Decodierer 14 ab, der dann den Großteil der Fehler korrigiert und seine Ausgangsignale an eine Datensenke 16 weitergibt. Es handelt sich hier um das Übertragungs- und Empfangsschema, auf das sich die Erfindung mit der a-priori Informationserfassung und -verarbeitung bezieht.

Figur 2 zeigt den Fall nach dem Stand der Technik, bei dem ein Datenrahmen im Rahmen eines ARQ-Protokolls zweimal übertragen wird. Der zuerst gesendete Datenrahmen y (1) wird dem Entzerrer 10 (1) zugeführt und gelangt von dort über den Deinterleaver 12 (1) zu einem Kombinierer 18. Das Signal y (2) des Datenrahmens bei der zweiten Übertragung wird dem Entzerrer 10 (2) zugeführt und gelangt von dort über den Deinterleaver 12 (2) ebenfalls zu dem Kombinierer 18, wo die beiden Signale kombiniert werden. Der Ausgang des Kombinierers 18 gelangt über den Decodierer 14 zu der Datensenke als Block ûᵢ. Als Kombinierer kommt eine Einrichtung in Frage, die nach der DE 42 24 214 C2 arbeitet oder ein Combining mit einem "Symbol-nach-Symbol" MAP-Algorithmus durchführt.

Gemäß dem Blockdiagramm von Figur 3, welches ein erstes Ausführungsbeispiel der erfindungsgemäßen Einrichtung zeigt, wird das Signal y (1) dem Entzerrer 10 (1), von dort dem Deinterleaver 12 (1) und dem Decodierer 14 (1) zugeführt. Das Signal am Ausgang des Decodierers 14 (1) mit seiner "soft"oder "hard"-Information wird in diesem Beispiel verworfen, was durch den Pfeil angedeutet ist, so daß im Rahmen des ARQ-Protokolls eine erneute Sendung des Datenrahmen als Signal y (2) erforderlich wird, das dem Entzerrer 10 (2) zugeführt wird. Zusammen mit dem Signal y (2) wird dem Entzerrer 10 (2) die am Ausgang des Decodierers 14 (1) anstehende Information entsprechend den codierten Bits über einen Interleaver 20 zugeführt. Der Entzerrer 10 (2) verarbeitet die beiden Signale und gibt sein Ausgangssignal an den Deinterleaver 12 (2) ab, der die Signale über den Decodierer 14 (2) an die Datensenke 16 für die Signale ûᵢ abgibt.

Wie aus dem Blockdiagramm zu ersehen ist, dient der Interleaver 20 dazu, die am Ausgang des Decodierers 14 (1) anstehende Information an den Eingang des Entzerrers 10 (2) als a-priori Information zu geben. Bei dem in Figur 3 gezeigten Ausführungsbeispiel ist die von dem Decodierer 14 (1) an den Entzerrer 10 (2) gegebene Information die Information, die den codierten Bits entspricht, wobei die "soft"-Information, daß heißt die extrinsische oder a-posteriori Information des Entzerrers 10 (2) nach dem Deinterleaving und Decodieren zu der Datensenke 16 gegeben wird, wo das Signal angenommen und das ARQ beendet wird.

Wenn der Datenblock nach der zweiten Übertragung immer noch verworfen wird, muß der Datenblock erneut übertragen werden. Das oben aufgezeigte Schema läßt sich dann so weit vervielfachen, daß die erneuten Übertragungen solange durchgeführt werden, bis die decodierten Datenblöcke angenommen werden oder das ARQ-Protokoll nach einer vorgegebenen Anzahl von erneuten Übertragungen abbricht.

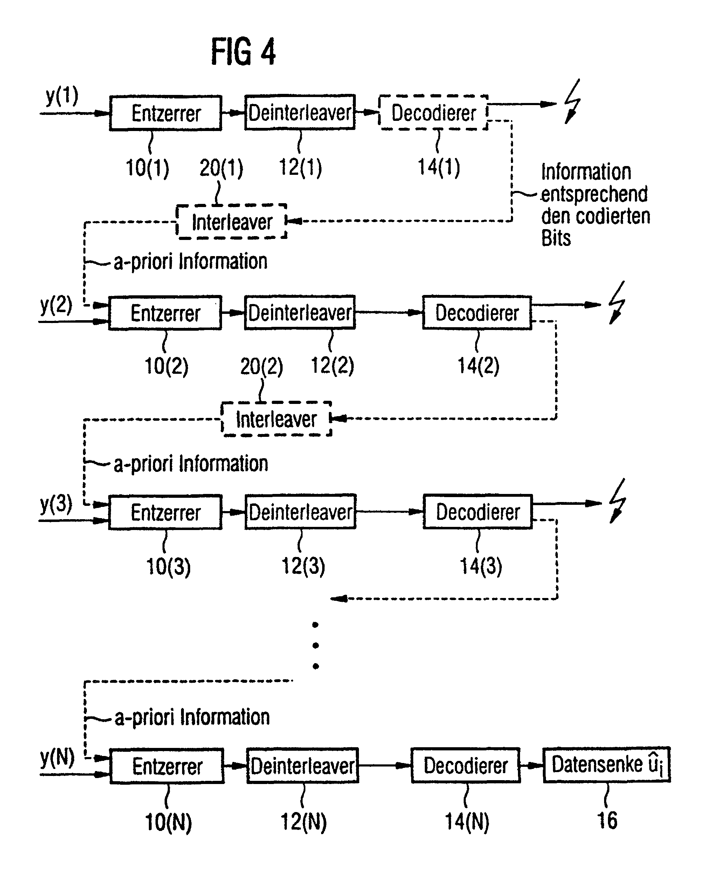

Ein Fall für eine vielfache, erneute Übertragung eines Datenblocks nach dem ARQ-Protokoll ist in Figur 4 dargestellt. Bei diesem Ausführungsbeispiel wird das Signal y (1), welches der ersten Übertragung des Datenrahmens entspricht, über den Entzerrer 10 (1), den Deinterleaver 12 (1) und den Decodierer 14 (1) verarbeitet und verworfen, was durch den Pfeil angedeutet ist. Das Signal y (2), welches der zweiten Übertragung des Datenrahmens entspricht, wird zusammen mit dem Ausgangssignal des Decodierers 14 (1), welches über den Interleaver 20 (1) an den Entzerrer 10 (2) zugeführt wird, verarbeitet und über den Deinterleaver 22 (2), den Decodierer 14 (2) weiterverarbeitet und verworfen. Dieses Prinzip geht weiter bis zu dem Signal y (N), welches der N-ten Übertragung des Datenrahmens entspricht und nach seiner Verarbeitung zusammen mit dem Ausgangssignal des vorangehenden Decodierers, welches als a-priori Information dem Entzerrer 10 (N) zugeführt wird, verarbeitet und über den Deinterleaver 12 (N), den Decodierer 14 (N) zur Datensenke 16 gelangt, nachdem das Ausgangssignal des Codierers 14 (N) akzeptiert worden ist. Bei diesem Ausführungsbeispiel wird also immer das Signal des erneut gesendeten Datenrahmens mit der Information am Ausgang des vorhergehenden Decodierers verarbeitet, was quasi einer voranschreitenden Verarbeitung entspricht.

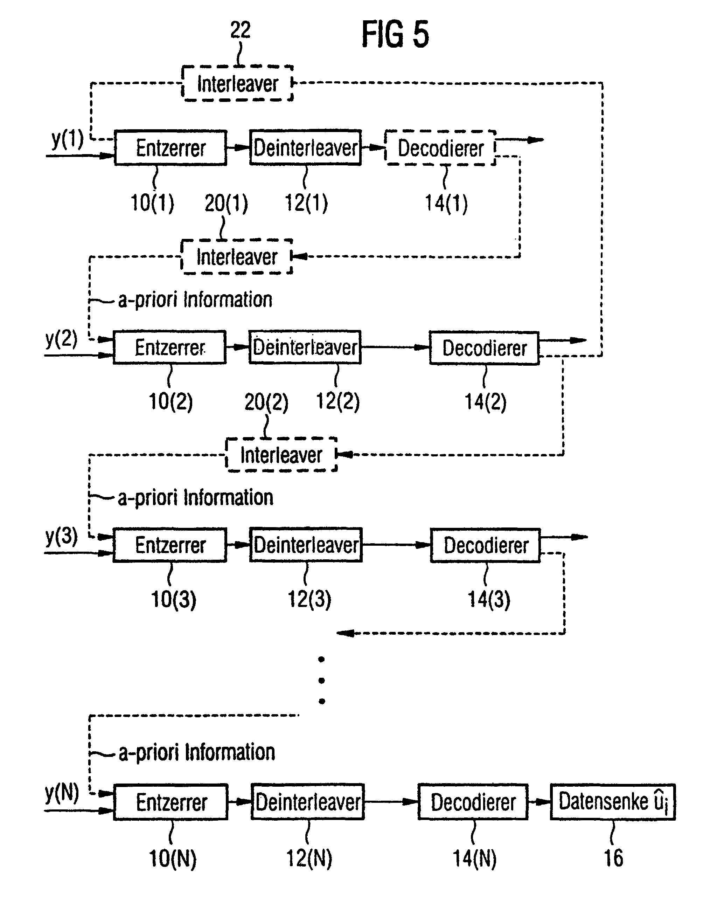

Ein anderes Ausführungsbeispiel der Erfindung ist in Figur 4 dargestellt, wobei wie in Figur 4 eine fortschreitende Verarbeitung der Signale y (n) mit n = 1 ... N erfolgt. Zusätzlich ist jedoch in Figur 5 noch die Möglichkeit gezeigt, daß das Signal eines Decodierers, beispielsweise des Decodierers 14 (2) über einen Interleaver 22 zu dem für das vorhergehende Signal y (1) zuständigen Entzerrer 10 (1) zurückgeführt wird. Ein entsprechender Interleaver kann dann auch zwischen dem Decodierer 14 (3) und dem Entzerrer 10 (2) und zwischen dem Decodierer 14 (N) und dem Entzerrer 10 (N - 1) vorgesehen sein. Damit ist sowohl eine vorwärtsschreitende als auch eine rückwärtsschreitende Verarbeitung möglich, in dem die Signale am Ausgang der Decodierer entweder an einen der nachfolgenden Entzerrer oder einen der vorhergehenden Entzerrer zugeführt wird.

Bei der n-ten Übertragung kann, wenn der Datenrahmen immer noch verworfen wird, nochmals die vorwärtsschreitende Verarbeitung beginnend an dem Entzerrer 10(1) durchgeführt werden, wobei über den Interleaver 22 die Information des Decodierers 14(n)als a-priori Information im Entzerrer 10(1) verwendet wird. Dabei wird jedesmal geprüft, ob der Datenrahmen verworfen wird. Solage der Datenrahmen fehlerhaft ist, kann die vorwärtsschreitende Verarbeitung wiederholt werden. Ein Abbruch ist auch nach einer festen Anzahl von Wiederholungen der vorwärtsschreitenden Verarbeitung möglich.

Die Erfindung ist nicht auf die gezeigten Ausführungsbeispiele beschränkt. Beispielsweise kann die vorwärtsschreitende Verarbeitung und auch die rückwärtsschreitende Verarbeitung dadurch erfolgen, daß die Ausgangssignale eines bestimmten Decodierers zu einer beliebigen der vorangehenden oder nachfolgenden Verarbeitung verwendet werden.

## Patentansprüche

1. Verfahren zur paketorientierten Datenübertragung in einem digitalen Übertragungssystem, bei dem
- zu übertragende Daten zu Datenrahmen zusammengefaßt, codiert, gesendet, empfangen und decodiert werden,
- ein ARQ-Protokoll im Fall eines fehlgeschlagenen ersten Versuchs, Daten eines ersten Datenrahmen zu decodieren, eine erneute Übertragung eines identischen zweiten Datenrahmens vorsieht,
- Decodierer (14) zusätzlich zu decodierten Daten eines übertragenen Datenrahmens eine Soft-Information erzeugen,
***dadurch gekennzeichnet, daß***
- eine während des früheren ersten Decodierversuchs gewonnene Soft-Information als a-priori-Information zur Auswertung des zweiten Datenrahmens nutzbar ist und eine während eines späteren zweiten Decodierversuchs gewonnene Soft-Information als a-priori-Information zur Auswertung des ersten Datenrahmens genutzt wird.

2. Verfahren nach Anspruch 1,
**dadurch gekennzeichnet, daß** das Verfahren abwechselnd in vorwärtsschreitender und in rückwärtsschreitender Verfahrensweise durchgeführt wird.

3. Verfahren nach Anspruch 1 oder 2,
**dadurch gekennzeichnet, daß** das Verfahren wiederholt wird, bis keine erneute Übertragung im Rahmen des ARQ-Protokolls angefordert wird.

4. Verfahren nach einem der Ansprüche 1 bis 3,
**dadurch gekennzeichnet, daß** das Verfahren nach einer vorgegebenen Anzahl von wiederholten Sendungen des Datenrahmens abgebrochen wird.

5. Verfahren nach einem der Ansprüche 1 bis 4,
**dadurch gekennzeichnet, daß** die a-priori-Information in einem Entzerrer (10) durch einen "Symbol-nach-Symbol"-MAP-Algorithmus verarbeitet wird.

6. Verfahren nach einem der Ansprüche 1 bis 5,
**dadurch gekennzeichnet, daß** von der Information am Ausgang des Decodierers (14) nur die extrinsische Information zur Weiterverarbeitung verwendet wird.

7. Verfahren nach einem der Ansprüche 1 bis 6,
**dadurch gekennzeichnet, daß** es bei einem GSM-System mit Radio-Link-Process-Protokoll angewendet wird.

8. Anordnung zur Durchführung eines Verfahrens nach Anspruch 1 mit
- einem einer Datenquelle (2) zugeordneten Codierer (4),
- einem dem Codierer (4) nachgeschalteten ersten Interleaver (6),
- einem über einen Kanal (8) mit dem ersten Interleaver (6) verbundenen Entzerrer (10),
- einem zwischen dem Entzerrer (10) und einem Decodierer (14) angeordneten Deinterleaver (12),
wobei der Decodierer (14) einen Ausgang aufweist, an dem eine Soft-Information verfügbar ist,
***dadurch gekennzeichnet, daß*** zwischen dem Ausgang des Decodierers (14), an dem die Soft-Information verfügbar ist, und einem Eingang des Entzerrers (10) ein zweiter Interleaver (20) angeordnet ist, und daß eine die Soft-Information dem Entzerrer (10) zuführende Steuereinrichtung mit dem zweiten Interleaver (20) gekoppelt ist und
**daß** beim Decodieren des Datenrahmens (n+1) gewonnene Soft-Information gemäß dem erfindungsgemäßen Verfahren mit einem oder mehreren der Datenrahmen (1 bis n) in rückwärtsschreitender Verfahrensweise verarbeitet wird.

9. Anordnung nach Anspruch 8,
**dadurch gekennzeichnet, daß** die Steuereinrichtung mit einem Decodierer (14) n (n = 1 ... N und N = Anzahl der im Rahmen des ARQ-Protokolls gesendeten Datenrahmen) und entweder mit einem Entzerrer (10) n+1 oder mit einem der Entzerrer (10) 1 bis n-1 gekoppelt ist.

## Claims

1. Method for packet-oriented data transmission in a digital transmission system, in which
- data to be transmitted is combined to form data frames, is coded, is transmitted, is received and is decoded,
- if a first attempt to decode data in a first data frame fails, an ARQ protocol is used to retransmit an identical second data frame,
- decoders (14) produce soft information in addition to decoded data from a transmitted data frame,
***characterized in that***
- soft information obtained during the previous first decoding attempt can be used as a-priori information for evaluation of the second data frame, and soft information obtained during a later, second decoding attempt, is used as a-priori information for evaluation of the first data frame.

2. Method according to Claim 1,
**characterized in that** the method is carried out alternately using a forwards procedure and a rearwards procedure.

3. Method according to Claim 1 or 2,
**characterized in that** the method is repeated until no retransmission is requested in the course of the ARQ protocol.

4. Method according to one of Claims 1 to 3,
**characterized in that** the method is terminated after a predetermined number of repeated transmissions of the data frame.

5. Method according to one of Claims 1 to 4,
**characterized in that** the a-priori information is processed in an equalizer (10) using a "symbol-by-symbol" MAP algorithm.

6. Method according to one of Claims 1 to 5,
**characterized in that**, of the information at the output of the decoder (14), only the extrinsic information is used for further processing.

7. Method according to one of Claims 1 to 6,
**characterized in that** said method is used in a GSM system with a radio link process protocol.

8. Arrangement for carrying out a method according to Claim 1, having
- a coder (4) which is associated with a data source (2),
- a first interleaver (6) which is connected downstream from the coder (4),
- an equalizer (10) which is connected to the first interleaver (6) via a channel (8), and
- a deinterleaver (12) which is arranged between the equalizer (10) and a decoder (14), with the decoder (14) having an output at which soft information is available,
***characterized in that*** a second interleaver (20) is arranged between that output of the decoder (14) at which the soft information is available and one input of the equalizer (10), and **in that** a control device, which supplies the soft information to the equalizer (10), is coupled to the second interleaver (20), and **in that** soft information obtained during decoding of the data frame (n+1) is processed, in accordance with the method according to the invention, using a backwards procedure, with one or more of the data frames (1 to n).

9. Arrangement according to Claim 8,
**characterized in that** the control device is coupled to a decoder (14) n (n = 1 ... N and N = number of data frames transmitted in the course of the ARQ protocol), and either to an equalizer (10) n+1 or to one of the equalizers (10) 1 to n-1.

## Revendications

1. Procédé pour la transmission de données orientée paquets dans un système de transmission numérique, dans lequel :
- les données à transmettre au cadre de données sont recueillies, codées, envoyées, reçues et décodées,
- un protocole ARQ prévoit une nouvelle transmission d'un deuxième cadre de données identique, en cas d'échec d'une première tentative pour décoder les données dans un premier cadre de données,
- des décodeurs (14) créent une information logicielle en plus des données à décoder d'un cadre de données transmis, **caractérisé en ce que**
- une information logicielle extraite pendant la première tentative de décodage préalable est utilisable comme information a priori pour l'exploitation du deuxième cadre de données, et une information logicielle extraite pendant la seconde tentative de décodage ultérieure est utilisée comme information a priori pour l'exploitation du premier cadre de données.

2. Procédé selon la revendication 1, **caractérisé en ce que** le procédé est exécuté alternativement dans une façon de procéder vers l'avant et dans une façon de procéder vers l'arrière.

3. Procédé selon la revendication 1 ou 2, **caractérisé en ce que** le procédé est répété jusqu'à ce qu'aucune nouvelle transmission ne soit demandée dans le cadre du protocole ARQ.

4. Procédé selon l'une des revendications 1 à 3, **caractérisé en ce que** le procédé est interrompu après un nombre prédéfini d'émissions répétées du cadre de données.

5. Procédé selon l'une des revendications 1 à 4, **caractérisé en ce que** l'information a priori est traitée dans un égaliseur (10) par un algorithme MAP « symbole après symbole ».

6. Procédé selon l'une des revendications 1 à 5, **caractérisé en ce que** seule l'information extrinsèque de l'information à la sortie du décodeur (14) est utilisée pour un traitement ultérieur.

7. Procédé selon l'une des revendications 1 à 6, **caractérisé en ce qu'**il est appliqué avec un protocole de liaison hertzienne dans un système GSM.

8. Dispositif pour l'exécution d'un procédé selon la revendication 1 avec
- un codeur (4) attribué à une source de données (2),
- un premier entrelaceur (6) placé en aval du codeur (4),
- un égaliseur (10) raccordé au premier entrelaceur (6) à l'aide d'un canal (8),
- un désentrelaceur (12) placé entre l'égaliseur (10) et un décodeur (14), le décodeur (14) présentant une sortie sur laquelle une information logicielle est disponible,
**caractérisé en ce qu'**un deuxième entrelaceur (20) est placé entre la sortie du décodeur (14) sur laquelle l'information logicielle est disponible et l'une des entrées de l'égaliseur (10), et **en ce qu**'un dispositif de commande donnant l'information logicielle à l'égaliseur (10) est couplé au deuxième entrelaceur (20), et
- **en ce que** l'information logicielle extraite lors du décodage du cadre de données (n+1) selon le procédé conforme à l'invention est traitée avec un ou plusieurs des cadres de données (1 à n) dans une façon de procéder vers l'arrière.

9. Dispositif selon la revendication 8, **caractérisé en ce que** le dispositif de commande est couplé à un décodeur (14) n (n = 1...N et N = le nombre de cadres de données envoyé dans le cadre du protocole ARQ) et soit à un égaliseur (10) n+1 soit à l'un des égaliseurs (10) 1 à n-1.
